Europäisches Patentamt

European Patent Office

Office européen des brevets

(19)

(11) **EP 1 063 480 B1**

(12) **EUROPEAN PATENT SPECIFICATION**

(45) Date of publication and mention
of the grant of the patent:
**27.10.2004 Bulletin 2004/44**

(51) Int Cl.⁷: **F24H 8/00**

(21) Application number: **00305228.9**

(22) Date of filing: **20.06.2000**

(54) **Combustion Device**

Verbrennungseinheit

Dispositif de combustion

(84) Designated Contracting States:
**DE GB NL**

(30) Priority: **22.06.1999 JP 17522399**
**13.04.2000 JP 2000112480**

(43) Date of publication of application:
**27.12.2000 Bulletin 2000/52**

(73) Proprietor: **Rinnai Kabushiki Kaisha**
**Nagoya-shi, Aichi-ken (JP)**

(72) Inventors:
• **Sobue, Tsutomu**
**Nagoya-shi, Aichi-ken (JP)**
• **Koshimizu, Daisuke**
**Yokahama-shi, Kanagawa-ken (JP)**
• **Fukuyama, Kenjiro**
**Matsudo-shi, Chiba-ken (JP)**
• **Atarashiya, Yoshihiro**
**Toshima-ku, Tokyo (JP)**

(74) Representative: **Fenlon, Christine Lesley et al**
**Haseltine Lake,**
**Imperial House,**
**15-19 Kingsway**
**London WC2B 6UD (GB)**

(56) References cited:
**DE-A- 3 151 418**         **DE-A- 4 240 428**
**DE-C- 19 801 066**        **US-A- 4 478 158**

• **PATENT ABSTRACTS OF JAPAN vol. 1996, no. 11, 29 November 1996 (1996-11-29) & JP 08 173977 A (TOKYO GAS CO LTD), 9 July 1996 (1996-07-09)**

## Description

The present invention relates to a combustion device such as a water heater, a heating boiler, or the like, and more particularly to a combustion device for neutralizing and discharging a drain that is produced in a heat exchanger by a heat exchange with a gas discharged from a burner by fuel combustion therein.

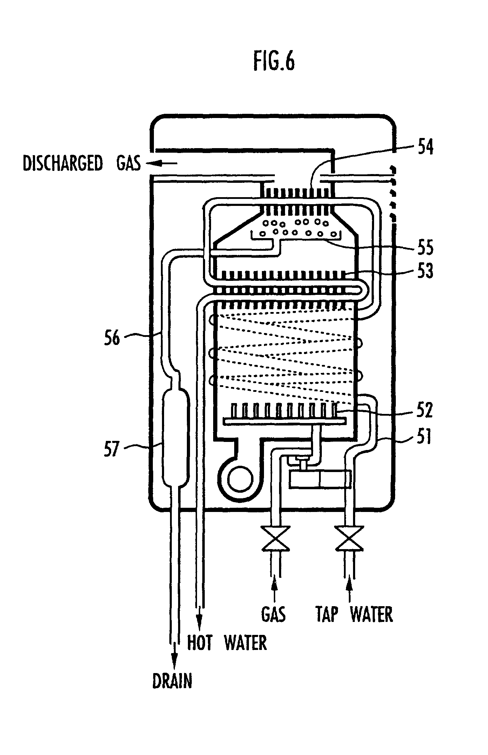

As shown in FIG. 6 of the accompanying drawings, a known hot water supply device as one example of combustion device comprises a water supply pipe 51, a burner 52, a first heat exchanger 53 disposed above the burner 52, a second heat exchanger 54 disposed above the first heat exchanger 53, a water discharge pipe 56 for discharging, as a drain, water condensed in the second heat exchanger 54 and collected by a receptacle 55 below the second heat exchanger 54, and a neutralizing unit 57 disposed in the water discharge pipe 56 and filled up with a solid alkaline neutralizer.

Water that flows through the water supply pipe 51 is progressively heated by the heat of a gas discharged from the burner 52 by fuel combustion therein, successively via the first heat exchanger 53, and the second heat exchanger 54 and is expelled from the hot water supply device as hot water of a predetermined temperature. Specifically, before the water flowing through the water supply pipe 51 is mainly heated by the first heat exchanger 53, the water has been heated by the discharged gas from the burner 52 whose temperature has been lowered because of the heat exchange in the first heat exchanger 53. Since the water flowing through the water supply pipe 51 is heated in two stages, the heat efficiency of the discharged gas from the burner 52 is increased.

When a water vapor contained in the discharged gas from the burner 52 is deprived of latent heat by the second heat exchanger 54, the water vapor is condensed into water, which is collected by the receptacle 55 and discharged as a drain via the water discharge pipe 56 from the hot water supply device. The drain comprises acid water of pH 4 because it absorbs nitrogen oxides (NOx) and sulfur oxides (SOx) from the discharged gas and contains nitric acid ($HNO_3$) and sulfuric acid ($H_2SO_4$). If the drain is not neutralized but discharged as it is, then it causes corrosion of metal parts such as the water discharge pipe 56, deterioration of concrete structures and buildings, and contamination of water which leads to environmental destruction. Therefore, it is necessary to neutralize the drain to the extent that its pH ranges from 5 to 9 as determined by the effluent standards.

To meet such a requirement, the hot water supply device shown in FIG. 6 has the neutralizing unit 57 disposed in the water discharge pipe 56 and filled up with a solid alkaline neutralizer. When the drain passes through the neutralizing unit 57, it is neutralized by the solid alkaline neutralizer, after which the neutralized drain is discharged from the hot water supply device.

However, the known drain neutralizing process is disadvantageous in that after the hot water supply device is used for a long period of time, corrosive products of the second heat exchanger 54 and dust particles in the air find their way into the neutralizer and the neutralizer is consumed. As a result, the neutralizing capability of the neutralizing unit 7 is lowered. One solution would be to use a liquid neutralizer such as an alkaline liquid or the like. However, a tank used to store such a liquid neutralizer would take up a large space, obstructing efforts to make the combustion device compact, and it is cumbersome to periodically replenish the liquid neutralizer.

It is therefore desirable to provide a combustion device which is capable of neutralizing a drain without the use of a neutralizer.

Previously considered combustion devices are disclosed in JP 08173977 and DE4240428. DE4240428 discloses a combustion device according to the preamble of claim 1.

According to the present invention, there is provided a combustion device comprising a water supply pipe; a bumer; a heat exchanger disposed in said water supply pipe for exchanging heat with a discharged gas from said burner to increase the temperature of water in said water supply pipe; a water discharge pipe for collecting condensed water produced in said heat exchanger when the heat exchanger exchanges heat with the discharged gas from said burner and discharging the collected condensed water as a drain; calculating means for calculating the produced amount of drain; and neutralizing means for mixing water with said drain so as to neutralize the drain, wherein the amount of water mixed by said neutralising means depends upon the amount of drain calculated by said calculating means, characterised in that there is further provided combustion controlling means for controlling the amount of combustion heat produced by said burner; said calculating means comprising means for calculating a produced amount of drain based on the amount of combustion heat controlled by said combustion controlling means.

The inventor has found that an acid drain can be neutralized by tap water supplied from a water supply system. This is because tap water contains hydroxide ions ($OH^-$) based on sodium carbonate, etc. as source water contains sodium carbonate and calcium carbonate by passing through the ground. The combustion device of the above construction is thus capable of neutralizing the drain with tap water without use of a neutralizer. The term "measuring" used herein refers to directly measuring the magnitude of a certain quantity using a device or instrument and based on a certain unit. The term "calculating" refers to indirectly determining the magnitude of a certain quantity based on a theory.

The inventor has also found that when the ratio of the amount of tap water to the produced amount of drain is 2.0 or more, the acid drain of pH 4 can be neutralized to about pH 5 within the effluent standards (pH 5 - 9). If the ratio is increased to 6.0, then the drain can be sufficiently neutralized to pH 6. The inventor has further found that there is no need to further increase the ratio of tap water to the produced amount of drain for thereby increasing the amount of tap water used. Therefore, the neutralizing means may control the ratio of the amount of tap water to the produced amount of drain measured by the measuring means in a range from 2.0 to 6.0.

The combustion device preferably comprises a branch pipe branched from the water supply pipe and joined to the water discharge pipe, the neutralizing means having flow rate control means for controlling the rate of water flowing through the branch pipe.

With this arrangement, no tank is required to store tap water for neutralizing the drain, and hence the combustion device can be made compact. In addition, when the combustion device is installed, it is not necessary to connect a tap water pipe for supplying tap water to neutralize the drain to a water source separate from the water supply pipe.

In order to control the amount of tap water to be mixed with the drain adequately for neutralizing the drain, it is necessary to accurately measure the produced amount of drain. Since the amount of drain is determined depending on the amount of combustion heat produced by the burner, the amount of drain can be measured based on the amount of combustion heat. Furthermore, inasmuch as the amount of combustion heat is determined by the amount of the fuel supplied to the burner and the ratio of the amount of combustion air to the amount of the fuel, the amount of drain can be measured based on this ratio. When the amount of combustion heat of the burner is controlled in a feedback process to make the temperature of outgoing hot water coincident with the target outgoing hot water temperature, the amount of drain can be measured based on the amount of combustion heat. When the amount of combus-tion heat is corrected in view of measurement errors of the amount of water, the temperature of incoming water, and the temperature of outgoing hot water for increased control accuracy, the amount of drain can be measured based on the amount of combustion heat.

Preferably, the combustion device further comprises combustion controlling means for controlling the amount of combustion heat produced by the burner, the measuring means comprising means for measuring a produced amount of drain based on the amount of combustion heat controlled by the combustion controlling means.

Preferably, the combustion controlling means comprises fuel supply control means for controlling the rate of a fuel supplied to the burner, and combustion air regulating means for adjusting the ratio of combustion air to the rate of the fuel supplied to the burner for thereby controlling the amount of combustion heat produced by the burner.

Preferably, the combustion device further comprises water flow measuring means for measuring the rate of water flowing through the water supply pipe, incoming water temperature measuring means for measuring the temperature of incoming water in the water supply pipe upstream of the heat exchanger, and outgoing hot water temperature measuring means for measuring the temperature of outgoing hot water downstream of the heat exchanger, hot water temperature setting means for setting a target outgoing hot water temperature, the combustion controlling means comprising means for controlling the amount of combustion heat produced by the burner depending on the rate of water measured by the water flow measuring means, the temperature of incoming water measured by the incoming water temperature measuring means, and the target outgoing hot water temperature set by the hot water temperature setting means, and regulating the amount of combustion heat produced by the burner in order to reduce the difference between the temperature of outgoing hot water measured by the outgoing hot water temperature measuring means and the target outgoing hot water temperature set by the hot water temperature setting means.

Preferably, the combustion controlling means comprises combustion correcting means for correcting the amount of combustion heat depending on a measurement error of the water flow measuring means, the incoming water temperature measuring means, or the outgoing hot water temperature measuring means.

As the amount of combustion heat produced by the burner varies, the produced amount of drain also varies. However, there is a certain time delay until the produced amount of drain varies after the amount of combustion heat varies. Therefore, the measuring means should preferably comprise means for measuring an amount of drain with a predetermined time delay from the time when the combustion controlling means controls the amount of combustion heat. This arrangement eliminates the above drawbacks and allows the drain to be reliably neutralized.

How the produced amount of drain is measured from the amount of combustion heat produced by the burner will be described below. Part of a water vapor generated by combustion in the burner is condensed into a drain in the heat exchanger, and the remaining water vapor is discharged as contained in the discharged gas from the combustion device. Therefore, the amount of water condensed in the heat exchanger, i.e., the produced amount of drain, can accurately be measured by subtracting the discharged amount of water vapor from the produced amount of water vapor.

The produced amount of water vapor is determined depending on the amount of combustion heat. Consequently, the produced amount of water vapor can be measured based on the amount of combustion heat. Furthermore, since the discharged amount of water vapor is determined depending on the temperature of a discharged gas, i.e., the temperature of a discharged combustion gas after it has exchanged heat with the heat exchanger, the discharged amount of water vapor can be measured based on the temperature of the discharged gas. Moreover, since the temperature of the discharged gas is determined depending on the temperature of the discharged combustion gas before it exchanges heat with the heat exchanger, and also the heat exchange coefficient of the heat exchanger, the temperature of the discharged gas can be measured based on the temperature of the discharged combustion gas and the heat exchange coefficient of the heat exchanger. Because the temperature of the discharged combustion gas is determined depending on the amount of combustion heat produced by the burner, the temperature of the discharged combustion gas can be measured based on the amount of combustion heat. In addition, inasmuch as the heat exchange coefficient is determined depending on the temperature of the incoming water, heat exchange coefficient can be corrected based on the temperature of the incoming water for more accurately measuring the temperature of the discharged gas.

Preferably, the measuring means comprises amount-of-produced-water-vapor measuring means for measuring an amount of water vapor produced upon combustion in the burner, amount-of-discharged-water-vapor measuring means for measuring an amount of water vapor discharged with the discharged gas, and means for measuring the amount of drain by subtracting the amount of water vapor discharged which is measured by the amount-of-discharged-water-vapor measuring means from the amount of water vapor produced which is measured by the amount-of-produced-water-vapor measuring means.

Preferably, the combustion device further comprises combustion controlling means for controlling the amount of combustion heat produced by the burner, the amount-of-produced-water-vapor measuring means comprising means for measuring an amount of water vapor produced based on the amount of combustion heat controlled by the combustion controlling means.

Preferably, the amount-of-discharged-water-vapor measuring means comprises discharged-gas-temperature measuring means for measuring the temperature of the discharged gas, and means for measuring an amount of water vapor discharged based on the temperature of the discharged gas measured by the discharged-gas-temperature measuring means.

Preferably, the discharged-gas-temperature measuring means comprises temperature-of-discharged-combustion-gas measuring means for measuring the temperature of a discharged combustion gas, and means for measuring the temperature of the discharged gas based on the temperature of the discharged combustion gas measured by the temperature-of-discharged-combustion-gas measuring means and the heat exchange coefficient of the heat exchanger.

Preferably, the temperature-of-discharged-combustion-gas measuring means comprises means for measuring the temperature of the discharged combustion gas based on the amount of combustion heat produced by the burner.

Preferably, the temperature-of-discharged-combustion-gas measuring means comprises incoming water temperature measuring means for measuring the temperature of incoming water in the water supply pipe upstream of the heat exchanger, and heat exchange coefficient correcting means for correcting the heat exchange coefficient of the heat exchanger based on the temperature of incoming water measured by the incoming water temperature measuring means.

The combustion device thus arranged is capable of measuring the produced amount of drain for thereby appropriately controlling the amount of tap water to be mixed with the drain for reliably neutralizing the drain.

For a better understanding of the present invention, and to show how the same may be carried into effect, reference will now be made, by way of example, to the accompanying draings, in which:

FIG. 1 is a schematic view, partly in block form, of a hot water supply device according to an embodiment of the present invention;
FIGS. 2(a) and 2(b) are diagrams showing a controlled quantity of the hot water supply device according to the embodiment of the present invention;
FIG. 3 is a flowchart of a process of measuring an amount of drain produced by the hot water supply device according to the embodiment of the present invention;
FIG. 4 is a diagram illustrative of the ability of tap water to neutralize the drain;
FIG. 5 is a flowchart of a process of measuring an amount of drain produced by a hot water supply device according to another embodiment of the present invention; and
FIG. 6 is a schematic view, partly in block form, of a conventional hot water supply device.

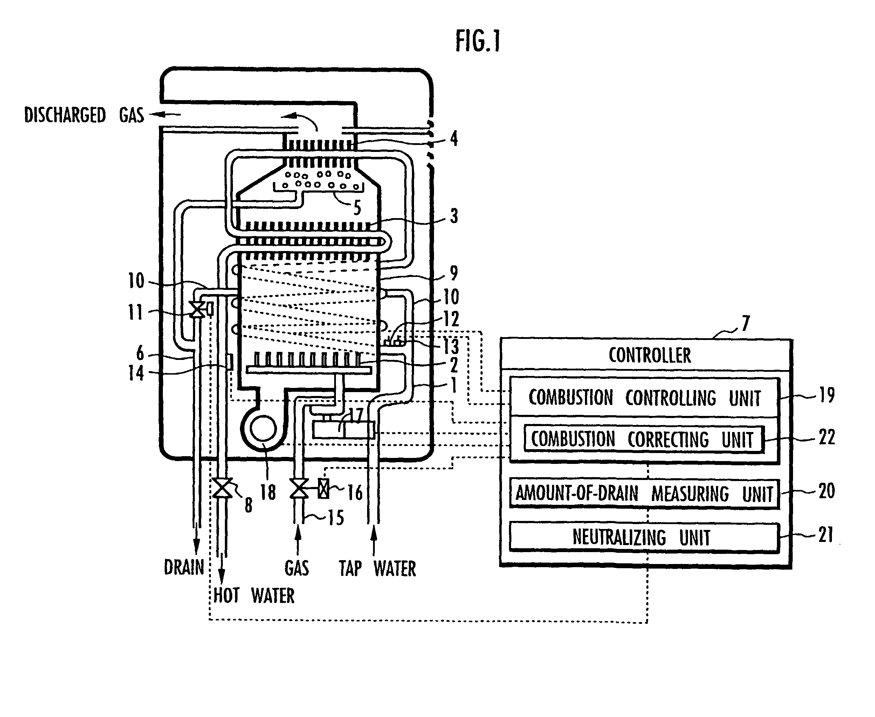

As shown in FIG. 1, a hot water supply device as a combustion device according to an embodiment of the present invention comprises a water supply pipe 1, a burner 2, a first heat exchanger 3 disposed above the burner 2, a second heat exchanger (heat exchanger according to the present invention) 4 disposed above the first heat exchanger 3, a water discharge pipe 6 for discharging, as a drain, water condensed in the second heat exchanger 4 and collected by a receptacle 5 below the second heat exchanger 4, and a controller 7 for controlling operation of the combustion device.

A faucet 8 is connected to the water supply pipe 1 near its outlet. The faucet 8 is manually operable by the user to selectively open and close the water supply pipe 1. The water supply pipe 1 extends in contact with an outer wall of a combustion chamber 9 which houses the burner 2, then through the second heat exchanger 4, and then through the first heat exchanger 3.

A branch pipe 10 is branched from the water supply pipe 1 at a position upstream of the second heat exchanger 4, and is joined to the water discharge pipe 6. The branch pipe 10 has a flow regulating valve 11 for adjusting the opening of the branch pipe 10. The water supply pipe 1 is associated with a water flow meter 12 for measuring the rate of water flowing therethrough upstream of the second heat exchanger 4, an incoming water temperature meter 13 for measuring the temperature of incoming water in the water supply pipe 1 upstream of the second heat exchanger 4, and an outgoing hot water temperature meter 14 for measuring the temperature of outgoing hot water in the water supply pipe 1 downstream of the first heat exchanger 3.

A gas supply pipe 15 is connected to the burner 2, and associated with a main gas supply solenoid-operated valve 16 and a gas regulating valve 17 for adjusting the rate of a gas supplied to the burner 2. A combustion fan 18 is connected to the burner 2 for supplying combustion air to the burner 2.

The controller 7 has a combustion controlling unit 19 for controlling the amount of combustion heat produced by the burner 2, a measuring unit 20 for measuring a produced amount of drain from the amount of combustion heat produced by the burner 2 as controlled by the combustion controlling unit 19, and a neutralizing unit 21 for neutralizing the drain. The combustion controlling unit 19 includes a combustion correcting unit 22. The combustion correcting unit 22 stores corrective data depending on measurement errors of the incoming water temperature meter 13 and the outgoing hot water temperature meter 14, and corrects the amount of combustion heat produced by the burner 2 based on the corrective data. Based on preliminary information indicating that the measurement error of the water flow meter 12 is steadily 5 %, the corrective data is determined to correct the amount of combustion heat in a direction to reduce the effect of such measurement error.

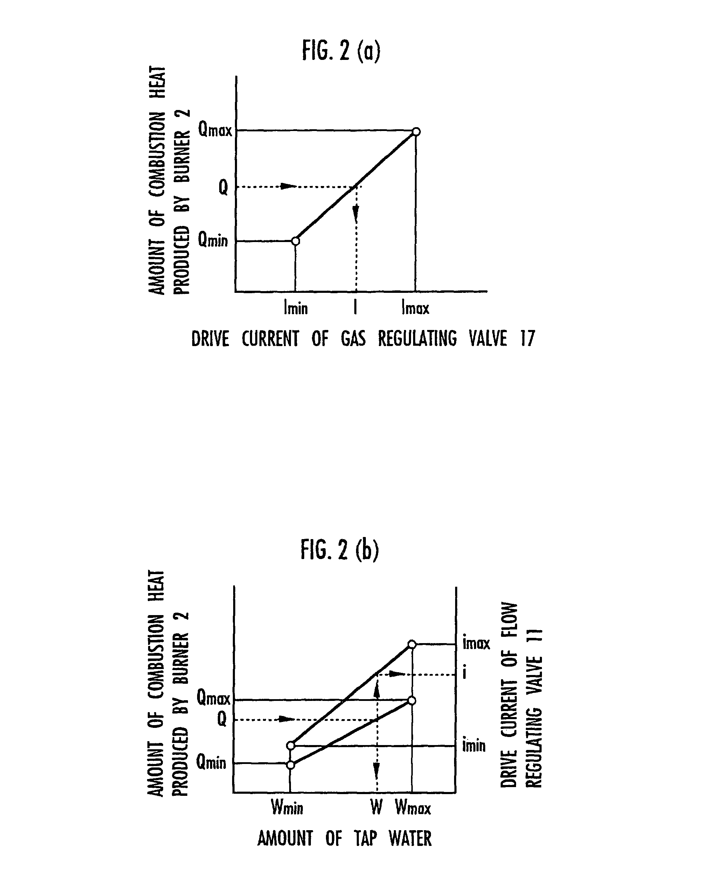

Operation of the hot water supply device will be described below with reference to FIGS. 1 through 3. The user manually operates the faucet 8 to let tap water flow into the water supply pipe 1. When the tap water flows at a rate greater than a predetermined level as measured by the water flow meter 12, the combustion controlling unit 19 operates the combustion fan 18. The combustion controlling unit 19 opens the main gas supply solenoid-operated valve 16, and enables an igniter (not shown) to ignite the burner 2 which starts burning the gas supplied from the gas supply pipe 15. The combustion controlling unit 19 controls the opening of the gas regulating valve 17 and the rotational speed of the combustion fan 18 to control the amount Q of combustion heat produced by the burner 2 according to a process described below. The opening of the gas regulating valve 17 is adjusted when a drive current I in the range from $I_{min}$ to $I_{max}$ is supplied to the gas regulating valve 17 depending on the amount Q of combustion heat controlled in the range from $Q_{min}$ to $Q_{max}$, as shown in FIG. 2(a).

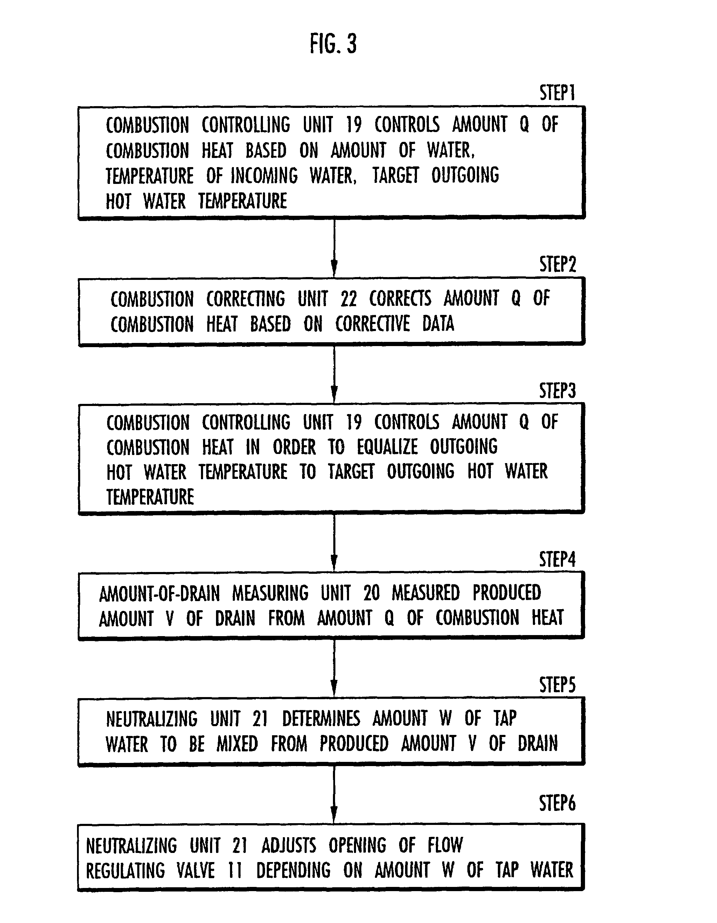

As shown in FIG. 3, the combustion controlling unit 19 controls the amount Q of combustion heat produced by the burner 2 based on the rate of water measured by the water flow meter 12, the incoming water temperature measured by the incoming water temperature meter 13, and a target hot water temperature set by the user in STEP1. Then, based on the corrective data, the combustion correcting unit 22 corrects the amount Q of combustion heat in a direction to reduce the effect of measurement errors of the water flow meter 12 and the incoming water temperature meter 13 in STEP2. Then, the combustion controlling unit 19 controls the amount Q of combustion heat in a feedback loop in order to equalize the outgoing hot water temperature measured by the outgoing hot water temperature meter 14 to the target hot water temperature in STEP3. The user can now obtain hot water at the target hot water temperature set by the user.

As the temperature of water flowing through the water supply pipe 1 rises, the discharged combustion gas from the burner 2 reduces its temperature due to a heat exchange with the first heat exchanger 3, and thereafter further reduces its temperature due to a heat exchange with the second heat exchanger 4. Because of the temperature drop of the discharged gas, a water vapor contained in the discharged combustion gas from the burner 2 is condensed in the second heat exchanger 4, drops into the receptacle 5, and is discharged as a drain via the water discharge pipe 6 from the hot water supply device. The drain is acid due to nitrogen oxides (NOx), etc. contained in the discharged combustion gas.

A process of neutralizing the drain in the hot water supply device will be described below with reference to FIGS. 2 and 3. The measuring unit 20 measures a produced amount V of drain from the amount Q of combustion heat in SETP4. Specifically, the amount-of-drain measuring unit 20 multiplies the amount of a produced drain per unit amount of combustion heat that has been determined depending on the type of the gas, by the amount Q of combustion heat thereby to measure the produced amount V of drain. Then, the neutralizing unit 21 determines an amount W of tap water to be mixed with the drain from the produced amount V of drain in STEP5. The neutralizing unit 21 then regulates a drive current i for the flow regulating valve 11 in a range from $i_{min}$ to $i_{max}$ from the amount W of tap water based on the relationship shown in FIG. 2(b) in STEP6. The relationship between the amount Q of combustion heat and the amount W of tap water shown in FIG. 2(b) is determined such that the ratio of the amount W of tap water to the produced amount V of drain ranges from 2.0 to 6.0. Alternatively, the flow regulating valve 11 may be replaced with a solenoid-operated on-off valve being provided to the branch pipe 10, and the neutralizing unit 21 may control the ratio (duty ratio) of the valve opening time to the control period (e.g., 30 seconds) to control the amount W of tap water to be mixed with the drain.

The adjustment of the opening of the flow regulating valve 11 is performed with a delay of a predetermined time from the adjustment of the opening of the gas regulating valve 17. Specifically, the measuring unit 20 first measures the produced amount V of drain from the amount Q of combustion heat, and, upon elapse of a certain time, supplies the measured amount V of drain to the neutralizing unit 21. This time delay is introduced in view of a time delay that is caused after a water vapor is produced depending on the amount Q of combustion heat until it is condensed in the second heat exchanger 4 and discharged as a drain. However, the opening of the flow regulating valve 11 may be controlled without such a time delay.

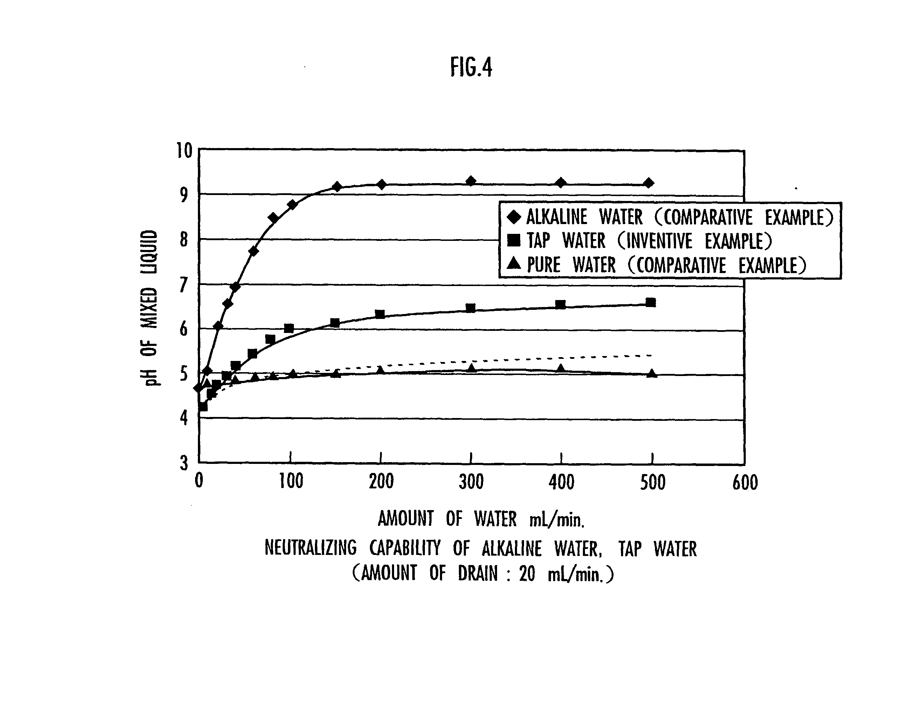

With the present hot water supply device, the ratio of the amount W of tap water to the produced amount V of drain is controlled to range from 2.0 to 6.0 by the neutralizing unit 21 for thereby neutralizing the acid drain sufficiently to meet the effluent standards. FIG. 4 shows the result of an experiment that the inventor conducted to confirm the neutralization of the acid drain. In the experiment, a drain of pH 4 was produced at a rate of 20 ml/min., and changes of pH were measured when tap water (indicated by square marks), alkaline water (indicated by lozenged marks), and pure water (indicated by triangular marks) were mixed with the drain at progressively increasing rates.

As shown in FIG. 4, when alkaline water is used, the pH becomes excessively alkaline, possibly exceeding the range from pH 5 to pH 9 which satisfies the environmental standards. Therefore, alkaline water is not suitable for the neutralization of the drain. When pure water is used, the pH of the drain remains to be about 5 and does not change even if the amount of mixed pure water is increased. Therefore, the neutralizing efficiency of pure water is poor. This appears to be caused by the fact that pure water becomes acid by absorbing carbon dioxide from the air with time.

When tap water is used, the pH does not become excessively alkaline unlike alkaline water. Tap water has a better neutralizing efficiency than pure water. Tap water exhibits a neutralizing capability probably because it contains hydroxide ions ($OH^-$) based on sodium carbonate or the like that is contained in source water. If the ratio of tap water to the produced amount of drain is 2.0 or more, then it can neutralize the drain into the range from pH 5 to pH 9 which satisfies the environmental standards. If the ratio of tap water to the produced amount of drain is increased to 6.0, then the pH of the drain becomes about 6, so that the drain is sufficiently neutralized. There is no need to further increase the ratio of tap water to the produced amount of drain for thereby increasing the amount of tap water used. Accordingly, the ratio of tap water to the produced amount of drain should be 6.0 or less.

The hot water supply device according to the invention is capable of neutralizing the drain simply by branching tap water from the water supply pipe 1 via the branch pipe 10 into the water discharge pipe 6. Therefore, the hot water supply device does not need to have a reservoir tank which would otherwise be required to store a liquid neutralizer such as an alkaline liquid or the like. The hot water supply device may be made compact, and is free of a cumbersome process of periodically replenishing the liquid neutralizer.

Furthermore, the combustion controlling unit 19 controls the amount Q of combustion heat in a feedback loop while eliminating the measurement errors of the water flow meter 12, etc., and the effect of the ratio of the amount of combustion air to the amount of the supplied gas. Consequently, the produced amount V of drain measured based on the amount Q of combustion heat is made accurate as it is free of those measurement errors. Accordingly, the amount W of tap water required to neutralize the drain is adequately controlled.

In the above embodiment, the process of neutralizing the drain from the hot water supply device has been described. However, the above process of neutralizing the drain may be applied to all types of combustion devices such as heating boilers which produce an acid drain in a heat exchanger due to the combustion of a fuel in a burner.

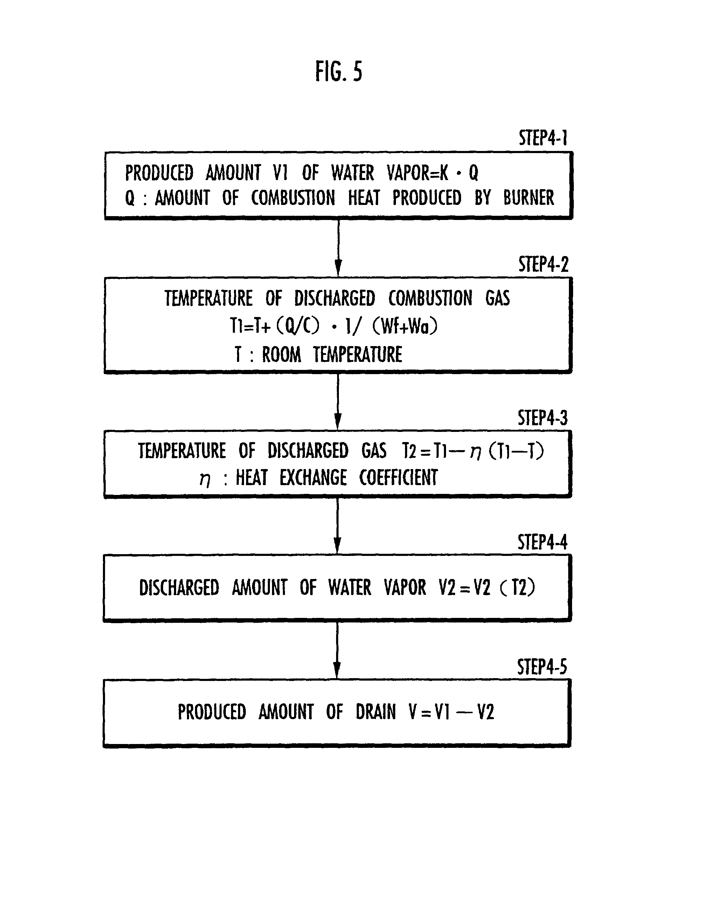

In the above embodiment, the measuring unit 20 measures a produced amount V of drain from the amount of combustion heat according to a predetermined algorithm. According to another embodiment, the measuring unit 20 measures a produced amount V of drain as follows: The processing in STEP4 shown in FIG. 3 is replaced with the processing in STEP4-1 - STEP4-5 shown in FIG. 5 to measure a produced amount V of drain. The alternative process of measuring a produced amount V of drain will be described below with reference to FIG. 5.

If the amount of water vapor produced per unit amount of combustion heat in the burner 2 is represented by V, then the amount $V_1$ of water vapor produced when the gas is combusted in the burner 2 is measured from the amount Q of combustion heat controlled by the combustion controlling unit 19 according to the following equation (1) in STEP4-1:

$$V_1 = k \cdot Q \qquad (1)$$

where k varies depending on the type of the fuel used by the burner 2.

If the room temperature is represented by T, the specific heat of the discharged gas by C, the mass flow rate of the fuel by $W_f$, and the mass flow rate of the air by $W_a$, then the temperature $T_1$ of the discharged combustion gas from the burner 2 is measured according to the following equation (2) in STEP4-2:

$$T_1 = T + Q/\{C(W_f + W_a)\} \qquad (2)$$

The temperature $T_1$ of the discharged combustion gas is the temperature of the discharged combustion gas before it performs a heat exchange with the first heat exchanger 3 and the second heat exchanger 4.

Then, the temperature $T_2$ of the discharged gas is measured from the temperature $T_1$ of the discharged combustion gas and a heat exchange coefficient η of the first heat exchanger 3 and the second heat exchanger 4 according to the following equation (3) in STEP4-3:

$$T_2 = T_1 - \eta(T_1 - T) \qquad (3)$$

The temperature $T_2$ of the discharged combustion gas is the temperature of the discharged gas after it performs a heat exchange with the first heat exchanger 3 and the second heat exchanger 4. The heat exchange coefficient η is a parameter indicative of the amount of heat which the first heat exchanger 3 and the second heat exchanger 4 remove from the discharged combustion gas, and is corrected such that it is determined in inverse proportion to the incoming water temperature.

The amount $V_2$ of water vapor discharged with the discharged gas is measured using the temperature $T_2$ of the discharged gas and a temperature-to-vapor conversion table in STEP4-4.

Finally, the produced amount V of drain is measured from the amount $V_1$ of water vapor produced and the amount $V_2$ of water vapor discharged according to the following equation (4) in STEP4-5:

$$V = V_1 - V_2 \qquad (4)$$

According to the above process, the produced amount V of drain can dynamically be measured based on the amount Q of combustion heat depending on changes of various physical quantities.

Although certain preferred embodiments of the present invention have been shown and described in detail, it should be understood that various changes and modifications may be made therein without departing from the scope of the appended claims.

**Claims**

1. A combustion device comprising:

    a water supply pipe (1);
    a bumer (2);
    a heat exchanger (3) disposed in said water supply pipe (1) for exchanging heat with a discharged gas from said burner (2) to increase the temperature of water in said water supply pipe;

    a water discharge pipe (6) for collecting condensed water produced in said heat exchanger (3) when the heat exchanger exchanges heat with the discharged gas from said bumer (2) and discharging the collected condensed water as a drain;
    calculating means (20) for calculating the produced amount of drain; and
    neutralizing means (21) for mixing water with said drain so as to neutralize the drain, wherein the amount of water mixed by aid neutralising means depends upon the amount of drain calculated by said calculating means (20), **characterised in that** there is further provided combustion controlling means (19) for controlling the amount of combustion heat produced by said burner (2) ; said calculating means comprising means for calculating a produced amount of drain based on the amount of combustion heat (Q) controlled by said combustion controlling means (19).

2. A combustion device according to claim 1, wherein said neutralizing means (21) comprises:

    means for controlling the ratio of the amount of water to the produced amount of drain calculated by said calculating means in a range from 2.0 to 6.0.

3. A combustion device according to claim 1 or 2, further comprising:

    a branch pipe (10) which extends between said water supply pipe and said water discharge pipe;

    said neutralizing means (21) having flow rate control means (11) for controlling the rate of water flowing through said branch pipe.

4. A combustion device according to any preceding claim, wherein said combustion controlling means (19) comprises:

    fuel supply control means for controlling the rate of a fuel supplied to said burner; and combustion air regulating means for adjusting the ratio of combustion air to the rate of the fuel supplied to said burner for thereby controlling the amount of combustion heat (Q) produced by said burner.

5. A combustion device according to claim 3 or 4, further comprising: water flow measuring means (12) for measuring the rate of water flowing through said water supply pipe (1);

incoming water temperature measuring means (13) for measuring the temperature of incoming water in the water supply pipe upstream of said heat exchanger; and

outgoing water temperature measuring means (14) for measuring the temperature of the outgoing water downstream of said heat exchanger;

hot water temperature setting means for setting a target outgoing hot water temperature;

said combustion controlling means (19) comprising means for controlling the amount of combustion heat (Q) produced by said burner depending on the rate of water measured by said water flow measuring means (12), the temperature of incoming water measured by said incoming water temperature measuring means (13), and the target outgoing hot water temperature set by said hot water temperature setting means, and regulating the amount of combustion heat produced by said burner in order to reduce the difference between the temperature of outgoing hot water measured by said outgoing hot water temperature measuring means (14) and the target outgoing hot water temperature set by said target water temperature setting means.

6. A combustion device according to claim 5, wherein said combustion controlling means (19) comprises:

combustion correcting means (22) for correcting the amount of combustion heat depending on a measurement error of said water flow measuring means (12), said incoming water temperature measuring means (13), or said outgoing hot water temperature measuring means (14).

7. A combustion device according to any one of claims 5 to 6, wherein said calculating means (20) comprises:

means for calculating an amount of drain (V) with a predetermined time delay from the time when said combustion controlling means controls the amount of combustion heat.

8. A combustion device according to any one of claims 1 to 3, wherein said calculating means (20) comprises:

amount-of-produced-water-vapor calculating means for calculating an amount of water vapor produced upon combustion in said burner;

amount-of-discharged-water-vapor calculating means for calculating an amount of water vapor discharged with the discharged gas; and means for calculating the amount of drain (V) by subtracting the amount of water vapor discharged which is calculated by said amount-of-discharged-water-vapor calculating means from the amount of water vapor produced which is calculated by said amount-of-produced-water-vapor-calculating means.

9. A combustion device according to claim 8, further comprising:

combustion controlling means (19) for controlling the amount of combustion heat (Q) produced by said burner;

said amount-of-produced-water-vapor calculating means comprising means for calculating an amount of water vapor produced based on the amount of combustion heat controlled by said combustion controlling means.

10. A combustion device according to claim 11, wherein said amount of discharged-water-vapor calculating means comprises:

discharged-gas-temperature measuring means for measuring the temperature of the discharged gas; and

means for calculating an amount of water vapor discharged based on the temperature of the discharged gas measured by said discharged-gas-temperature measuring means.

11. A combustion device according to claim 10, wherein said discharged-gas-temperature measuring means comprises:

temperature-of-discharged-combustion-gas measuring means for measuring the temperature of a discharged combustion gas; and

means for measuring the temperature of the discharged gas based on the temperature of the discharged combustion gas measured by said temperature-of-discharged-combustion-gas measuring means and the heat exchange coefficient of said heat exchanger.

12. A combustion device according to claim 11, wherein said temperature-of-discharged-combustion-gas measuring means comprises:

means for measuring the temperature of the discharged combustion gas based on the amount of combustion heat produced by said burner.

13. A combustion device according to claim 11, wherein said temperature-of-discharged-combustion-gas measuring means comprises:

incoming water temperature measuring means (13) for measuring the temperature of incoming water in said water supply pipe upstream of said heat exchanger; and

heat exchange coefficient correcting means for correcting the heat exchange coefficient of said heat exchanger based on the temperature of incoming water measured by said incoming water temperature measuring means.

**Patentansprüche**

1. Verbrennungsvorrichtung, umfassend:

   eine Wasserzulaufrohr (1);
   einen Brenner (2);
   einen Wärmetauscher (3), der im Wasserzulaufrohr (1) angeordnet ist und mit dem Abgas des Brenners (2) Wärme tauscht, so dass die Wassertemperatur im Wasserzulaufrohr steigt;
   ein Wasserauslassrohr (6) zum Sammeln des Kondenswassers, das im Wärmetauscher (3) entsteht, wenn der Wärmetauscher mit dem Abgas des Brenners (2) Wärme tauscht, und zum Ablassen des gesammeltem Kondenswassers als Ablass;
   eine Rechenvorrichtung (20) zum Berechnen der erzeugten Ablassmenge; und
   Neutralisiervorrichtungen (21) zum Mischen von Wasser und Ablass, so dass dieser neutralisiert wird,

   wobei die von der Neutralisiervorrichtung zugemischte Wassermenge von der Ablassmenge abhängt, die die Rechenvorrichtung (20) berechnet, **dadurch gekennzeichnet, dass** zudem eine Verbrennungssteuervorrichtung (19) vorhanden ist, welche die Menge der vom Brenner (2) erzeugten Verbrennungswärme steuert,
   wobei die Rechenvorrichtung Vorrichtungen aufweist zum Berechnen der erzeugten Ablassmenge und zwar bezogen auf die Menge an Verbrennungswärme (Q), die von der Verbrennungssteuervorrichtung (19) gesteuert wird.

2. Verbrennungsvorrichtung nach Anspruch 1, wobei die Neutralisiervorrichtung (21) Vorrichtungen umfasst zum Regeln des Verhältnisses von Wassermenge zu erzeugter Ablassmenge, die von der Rechenvorrichtung für einen Bereich von 2,0 bis 6,0 berechnet wird.

3. Verbrennungsvorrichtung nach Anspruch 1 oder 2, die zudem ein Abzweigungsrohr (10) umfasst, das sich zwischen dem Wasserzulaufrohr und dem Wasserablassrohr erstreckt, wobei die Neutralisiervorrichtung (21) eine Fließrate-Steuervorrichtung (11) zur Steuerung der Wasserdurchflussrate durch das Abzweigungsrohr aufweist.

4. Verbrennungsvorrichtung nach irgendeinem vorhergehenden Anspruch, wobei die Verbrennungssteuervorrichtung (19) Regelvorrichtungen für die Brennstoffzufuhr umfasst, welche die Brennstoffrate, die dem Brenner zugeführt wird, regeln; und
   Verbrennungsluft-Regelvorrichtungen zum Einstellen des Verhältnisses von Verbrennungsluft zu Brennstoffrate, die dem Brenner zugeführt wird, so dass die Menge der vom Brenner erzeugten Verbrennungswärme (Q) geregelt wird.

5. Verbrennungsvorrichtung nach Anspruch 3 oder 4, die zudem umfasst:

   Wasserfluss-Messvorrichtungen (12) zum Messen der Wasserflussrate durch das Wasserzulaufrohr (1);
   Zulaufwassertemperatur-Messvorrichtungen (13) zum Messen der Temperatur des zulaufenden Wassers im Wasserzulaufrohr stromaufwärts des Wärmetauschers; und
   Ablaufwassertemperatur-Messvorrichtungen (14) zum Messen der Temperatur des ablaufenden Wassers stromabwärts des Wärmetauschers;
   Heißwassertemperatur-Einstellvorrichtungen zum Einstellen einer Solltemperatur für das ablaufende heiße Wasser;

   wobei die Verbrennungssteuervorrichtung (19) umfasst: Vorrichtungen zum Regeln der Menge der vom Brenner erzeugten Verbrennungswärme (Q) in Abhängigkeit von der von der Wasserflussmessvorrichtung (12) gemessenen Wasserrate, der von der Zulaufwassertemperatur-Messvorrichtung (13) gemessenen Temperatur des Zulaufwassers und von der von der Heißwassertemperatur-Einstellvorrichtung eingestellten Solltemperatur des heißen Ablaufwassers und zum Steuern der Menge der vom Brenner erzeugten Verbrennungswärme, so dass der Unterschied zwischen der Temperatur des heißen Ablaufwassers, die von der Messvorrichtung (14) für das heiße Ablaufwasser gemessen wird, und der Solltemperatur für das heiße Ablaufwasser, die von der Soll-Wassertempeatureinstellvorrichtung vorgegeben wird, kleiner wird.

6. Verbrennungsvorrichtung nach Anspruch 5, wobei die Verbrennungssteuervorrichtung (19) Verbrennungskorrekturvorrichtungen (22) umfasst zum Korrigieren der Verbrennungswärmemenge in Abhängigkeit vom Messfehler der Wasserflussmessvorrichtung (12), der Zulaufwassertemperatur-Messvorrichtung (13) oder der Temperaturmessvorrichtung (14) für das heiße Ablaufwasser.

7. Verbrennungsvorrichtung nach einem der Ansprüche 5 bis 6, wobei die Rechenvorrichtung (20) umfasst:

Vorrichtungen zum Berechnen einer Ablassmenge (V) mit einer vorbestimmten Zeitverzögerung von dem Zeitpunkt an, an dem die Verbrennungssteuervorrichtung die Menge der Verbrennungswärme steuert.

8. Verbrennungsvorrichtung nach einem der Ansprüche 1 bis 3, wobei die Rechenvorrichtung (20) umfasst:

Berechnungsvorrichtungen für die Menge an erzeugtem Wasserdampf, welche die Menge an Wasserdampf berechnen, die bei der Verbrennung im Brenner erzeugt wird; Berechnungsvorrichtungen für die Menge an abgegebenem Wasserdampf, welche die Menge an Wasserdampf berechnen, die mit dem Abgas abgegeben wird; und Vorrichtungen zum Berechnen der Ablassmenge (V), indem die Menge an abgegebenem Wasserdampf, errechnet von der Berechnungsvorrichtung für die Menge abgegebenem Wasserdampf, subtrahiert wird von der Menge an erzeugtem Wasserdampf, die von der Berechnungsvorrichtung für die Menge an erzeugtem Wasserdampf errechnet wird.

9. Verbrennungsvorrichtung nach Anspruch 8, die zudem umfasst:

Verbrennungssteuervorrichtungen (19) zur Steuerung der Menge an Verbrennungswärme (Q), die vom Brenner erzeugt wird;

wobei die Berechnungsvorrichtung für die Menge an erzeugtem Wasserdampf Vorrichtungen umfasst zum Berechnen der Menge an erzeugtem Wasserdampf und zwar bezogen auf die Menge an Verbrennungswärme, die von der Verbrennungssteuervorrichtung (19) gesteuert wird.

10. Verbrennungsvorrichtung nach Anspruch 11, wobei die Berechnungsvorrichtung für die Menge an erzeugtem Wasserdampf umfasst:

Messvorrichtungen für die Abgastemperatur, die die Temperatur des Abgases messen; und Vorrichtungen zum Berechnen der Menge an abgegebenem Wasserdampf und zwar bezogen auf die Abgastemperatur, die von der Messvorrichtung für die Abgastemperatur gemessen wird.

11. Verbrennungsvorrichtung nach Anspruch 10, wobei die Messvorrichtungen für die Abgastemperatur umfasst:

Messvorrichtungen für die Temperatur der Verbrennungsabgase, welche die Temperatur der Verbrennungsabgase messen; und Vorrichtungen zum Messen der Temperatur des Abgases bezogen auf die Temperatur der Verbrennungsabgase, die von der Temperaturmessvorrichtungen für das Verbrennunsabgas gemessen wird, sowie des Wärmetauschkoeffizienten des Wärmetauschers.

12. Verbrennungsvorrichtung nach Anspruch 11, wobei die Temperaturmessvorrichtung für die Verbrennungsabgase umfasst:

Vorrichtungen zum Messen der Temperatur des Verbrennungsabgases und zwar bezogen auf die von dem Brenner erzeugte Menge an Verbrennungswärme.

13. Verbrennungsvorrichtung nach Anspruch 11, wobei die Temperaturmessvorrichtung für die Verbrennungsabgase umfasst:

Temperaturmessvorrichtungen (13) für das Zulaufwasser, welche die Temperatur des Zulaufwassers im Wasserzulaufrohr stromaufwärts des Wärmetauschers messen; und Korrekturvorrichtungen für den Wärmetauschkoeffizienten, welche den Wärmetauschkoeffizienten des Wärmeaustauschers korrigieren und zwar bezogen auf die Temperatur des Zulaufwassers, die von der Temperaturmessvorrichtung für das Zulaufwasser gemessen wird.

**Revendications**

1. Dispositif de combustion, comprenant :

un tuyau d'alimentation d'eau (1) ;
un brûleur (2) ;
un échangeur de chaleur (3) disposé dans ledit tuyau d'alimentation d'eau (1), destiné à échanger de la chaleur avec un gaz évacué dudit brûleur (2), afin d'augmenter la température de l'eau dans ledit tuyau d'alimentation d'eau ;
un tuyau d'évacuation d'eau (6) destiné à collecter l'eau condensée produite dans ledit échangeur de chaleur (3) lorsque l'échangeur de chaleur échange de la chaleur avec le gaz évacué dudit brûleur (2) et à évacuer l'eau condensée collectée comme drain ;
un moyen de calcul (20) destiné à calculer la quantité de drain produite ; et

un moyen de neutralisation (21) destiné à mélanger de l'eau avec ledit drain, afin de neutraliser le drain, où la quantité d'eau mélangée par ledit moyen de neutralisation dépend de la quantité de drain calculée par ledit moyen de calcul (20), **caractérisé en ce qu'**il est prévu, par ailleurs, un moyen de contrôle de combustion (19) destiné à contrôler la quantité de chaleur de combustion produite par ledit brûleur (2) ; ledit moyen de calcul comprenant un moyen pour calculer une quantité de drain produite sur base de la quantité de chaleur de combustion (Q) contrôlée par ledit moyen de contrôle de combustion (19).

2. Dispositif de combustion selon la revendication 1, dans lequel ledit moyen de neutralisation (21) comprend :

un moyen pour contrôler le rapport entre la quantité d'eau et la quantité de drain produite calculée par ledit moyen de calcul dans une plage de 2,0 à 6,0.

3. Dispositif de combustion selon la revendication 1 ou 2, comprenant par ailleurs :

un tuyau de branchement (10) qui s'étend entre ledit tuyau d'alimentation d'eau et ledit tuyau d'évacuation d'eau ;
ledit moyen de neutralisation (21) présentant un moyen de contrôle de débit (11) destiné à contrôler la quantité d'eau circulant dans ledit tuyau de branchement.

4. Dispositif de combustion selon l'une quelconque des revendications précédentes, dans lequel ledit moyen de contrôle de combustion (19) comprend :

un moyen de contrôle d'alimentation de combustible destiné à contrôler la quantité de combustible alimentée vers ledit brûleur ; et
un moyen de régulation d'air de combustion destiné à régler le rapport entre l'air de combustion et la quantité du carburant alimenté vers ledit brûleur, pour ainsi contrôler la quantité de chaleur de combustion (Q) produite par ledit brûleur.

5. Dispositif de combustion selon la revendication 3 ou 4, comprenant par ailleurs :

un moyen de mesure de flux d'eau (12) destiné à mesurer la quantité d'eau circulant dans ledit tuyau d'alimentation d'eau (1) ;
un moyen de mesure de température de l'eau entrante (13) destiné à mesurer la température de l'eau entrante dans le tuyau d'alimentation d'eau en amont dudit échangeur de chaleur ; et
un moyen de mesure de température de l'eau sortante (14) destiné à mesurer la température de l'eau sortante en aval dudit échangeur de chaleur ;
un moyen de réglage de la température d'eau chaude destiné à régler une température d'eau chaude sortante cible ;
ledit moyen de contrôle de combustion (19) comprenant un moyen destiné à contrôler la quantité de chaleur de combustion (Q) produite par ledit brûleur en fonction de la quantité d'eau mesurée par ledit moyen de mesure de flux d'eau (12), de la température de l'eau entrante mesurée par ledit moyen de mesure de température d'eau entrante (13), et de la température d'eau chaude sortante cible réglée par ledit moyen de réglage de température d'eau chaude, et pour réguler la quantité de chaleur de combustion produite par ledit brûleur, afin de réduire la différence entre la température d'eau chaude sortante mesurée par ledit moyen de mesure de température d'eau chaude sortante (14) et la température d'eau chaude de cible sortante réglée par ledit moyen de réglage de température d'eau cible.

6. Dispositif de combustion selon la revendication 5, dans lequel ledit moyen de contrôle de combustion (19) comprend :

un moyen de correction de combustion (22) destiné à corriger la quantité de chaleur de combustion en fonction d'une erreur de mesure dudit moyen de mesure de flux d'eau (12), dudit moyen de mesure de température d'eau entrante (13) ou dudit moyen de mesure de température d'eau chaude sortante (14).

7. Dispositif de combustion selon l'une quelconque des revendications 5 à 6, dans lequel ledit moyen de calcul (20) comprend :

un moyen destiné à calculer une quantité du drain (V) avec une temporisation prédéterminée par rapport au moment où ledit moyen de contrôle de combustion contrôle la quantité de chaleur de combustion.

8. Dispositif de combustion selon l'une quelconque des revendications 1 à 3, dans lequel ledit moyen de calcul (20) comprend :

un moyen de calcul de quantité de vapeur d'eau produite destiné à calculer une quantité de vapeur d'eau produite à la combustion dans ledit brûleur ;
un moyen de calcul de quantité de vapeur d'eau évacuée destiné à calculer une quantité de vapeur d'eau évacuée avec le gaz évacué ; et un moyen pour calculer la quantité de drain (V) en soustrayant la quantité de vapeur d'eau évacuée qui est calculée par ledit moyen de calcul de quantité de vapeur d'eau évacuée de la quantité de vapeur d'eau produite qui est calculée par ledit moyen de calcul de quantité de vapeur d'eau produite.

9. Dispositif de combustion selon la revendication 8, comprenant par ailleurs :

    un moyen de contrôle de combustion (19) destiné à contrôler la quantité de chaleur de combustion (Q) produite par ledit brûleur ;
    ledit moyen de calcul de quantité de vapeur d'eau produite comprenant un moyen pour calculer une quantité de vapeur d'eau produite sur base de la quantité de chaleur de combustion contrôlée par ledit moyen de contrôle de combustion.

10. Dispositif de combustion selon la revendication 11, dans lequel ledit moyen de calcul de quantité de vapeur d'eau évacuée comprend :

    un moyen de mesure de température de gaz évacué destiné à mesurer la température du gaz évacué ; et
    un moyen pour calculer une quantité de vapeur d'eau évacuée sur base de la température du gaz évacué mesuré par ledit moyen de mesure de température de gaz évacué.

11. Dispositif de combustion selon la revendication 10, dans lequel le moyen de mesure de température de gaz évacué comprend :

    un moyen de mesure de température de gaz de combustion évacué destiné à mesurer la température d'un gaz de combustion évacué ; et
    un moyen pour mesurer la température du gaz évacué sur base de la température du gaz de combustion évacué mesurée par ledit moyen de mesure de température de gaz de combustion évacué et du coefficient d'échange de chaleur dudit échangeur de chaleur.

12. Dispositif de combustion selon la revendication 11, dans lequel ledit moyen de mesure de température de gaz de combustion évacué comprend :

    un moyen pour mesurer la température du gaz de combustion évacué sur base de la quantité de chaleur de combustion produite par ledit brûleur.

13. Dispositif de combustion selon la revendication 11, dans lequel ledit moyen de mesure de température de gaz de combustion évacué comprend :

    un moyen de mesure de température d'eau entrante (13) destiné à mesurer la température de l'eau entrante dans ledit tuyau d'alimentation d'eau en amont dudit échangeur de chaleur ; et
    un moyen de correction de coefficient d'échange de chaleur destiné à corriger le coefficient d'échange de chaleur dudit échangeur de chaleur sur base de la température de l'eau entrante mesurée par ledit moyen de mesure de température d'eau entrante.

# FIG.1

DISCHARGED GAS ←

CONTROLLER — 7

| COMBUSTION CONTROLLING UNIT | — 19 |
| COMBUSTION CORRECTING UNIT | — 22 |
| AMOUNT-OF-DRAIN MEASURING UNIT | — 20 |
| NEUTRALIZING UNIT | — 21 |

DRAIN

HOT WATER

GAS   TAP WATER

EP 1 063 480 B1

## FIG. 2 (a)

AMOUNT OF COMBUSTION HEAT PRODUCED BY BURNER 2

Qmax

Q

Qmin

Imin    I    Imax

DRIVE CURRENT OF GAS REGULATING VALVE 17

## FIG. 2 (b)

AMOUNT OF COMBUSTION HEAT PRODUCED BY BURNER 2

DRIVE CURRENT OF FLOW REGULATING VALVE 11

imax

i

Qmax

Q

imin

Qmin

Wmin    W  Wmax

AMOUNT OF TAP WATER

## FIG. 3

STEP1

COMBUSTION CONTROLLING UNIT 19 CONTROLS AMOUNT Q OF COMBUSTION HEAT BASED ON AMOUNT OF WATER, TEMPERATURE OF INCOMING WATER, TARGET OUTGOING HOT WATER TEMPERATURE

STEP2

COMBUSTION CORRECTING UNIT 22 CORRECTS AMOUNT Q OF COMBUSTION HEAT BASED ON CORRECTIVE DATA

STEP3

COMBUSTION CONTROLLING UNIT 19 CONTROLS AMOUNT Q OF COMBUSTION HEAT IN ORDER TO EQUALIZE OUTGOING HOT WATER TEMPERATURE TO TARGET OUTGOING HOT WATER TEMPERATURE

STEP4

AMOUNT-OF-DRAIN MEASURING UNIT 20 MEASURED PRODUCED AMOUNT V OF DRAIN FROM AMOUNT Q OF COMBUSTION HEAT

STEP5

NEUTRALIZING UNIT 21 DETERMINES AMOUNT W OF TAP WATER TO BE MIXED FROM PRODUCED AMOUNT V OF DRAIN

STEP6

NEUTRALIZING UNIT 21 ADJUSTS OPENING OF FLOW REGULATING VALVE 11 DEPENDING ON AMOUNT W OF TAP WATER

## FIG.4

NEUTRALIZING CAPABILITY OF ALKALINE WATER, TAP WATER
(AMOUNT OF DRAIN : 20 mL/min.)

## FIG. 5

STEP4-1

PRODUCED AMOUNT V1 OF WATER VAPOR=K · Q
Q : AMOUNT OF COMBUSTION HEAT PRODUCED BY BURNER

STEP4-2

TEMPERATURE OF DISCHARGED COMBUSTION GAS
$T1 = T + (Q/C) \cdot 1/(Wf+Wa)$
T : ROOM TEMPERATURE

STEP4-3

TEMPERATURE OF DISCHARGED GAS $T2 = T1 - \eta (T1-T)$
$\eta$ : HEAT EXCHANGE COEFFICIENT

STEP4-4

DISCHARGED AMOUNT OF WATER VAPOR $V2 = V2 (T2)$

STEP4-5

PRODUCED AMOUNT OF DRAIN $V = V1 - V2$

## FIG.6